Europäisches Patentamt

European Patent Office

Office européen des brevets

(11) Publication number: **0 496 148 A2**

# EUROPEAN PATENT APPLICATION

(21) Application number: 91305061.3

(22) Date of filing: **05.06.91**

(51) Int. Cl.⁵: **C04B 18/10**, C04B 18/02

(30) Priority: **19.01.91 JP 19356/91**

(43) Date of publication of application:
**29.07.92 Bulletin 92/31**

(84) Designated Contracting States:
**DE GB IT**

(71) Applicant: **TAKUMA RESEARCH AND DEVELOPMENT CO., LTD.**
**3-23 Dojima Hama 1-Chome**
**Kita-Ku Osaka(JP)**

(72) Inventor: **Shigaki, Masanobu, c/o Takuma Co., Ltd.**
**3-23 Dojima Hama 1-chome**
**Kita-ku, Osaka(JP)**
Inventor: **Horino, Seiya, c/o Takuma Res. and Dev. Co., Ltd.**
**3-23 Dojima Hama 1-chome**
**Kita-ku, Osaka(JP)**

(74) Representative: **Daley, Michael John et al**
**F.J. CLEVELAND & COMPANY 40/43**
**Chancery Lane**
**London, WC2A 1JO(GB)**

(54) **Improvements in the treatment of ashes.**

(57) Incinerator ash is solidified with cement with the incorporation of clay to fix heavy metals. The clay is spent clay from oil purification with the oil removed.

FIG. 1

EP 0 496 148 A2

The present invention relates to the treatment of ashes produced in refuse incinerators to render these ashes harmless. More particularly the invention relates to an ash solidification method wherein leaching, even by acid-containing water (acid rain), of heavy metals contained in the solidified ashes is reduced.

Much city refuse and industrial waste is subjected to incineration for reduction in volume. The ashes produced in the incinerator and the floating ashes collected by the dust collectors are then dumped in a land fill site.

It has become difficult to obtain land fill sites because of the oppositions by the residents living in the vicinity of the designated land fill ground. The oppositions are based on the fact that the heavy metals contained in the ashes dumped at the land fill ground are often leached out i.e. dissolved by rain or other water to cause environmental pollution.

Scarcity of the land fill sites necessitates prolonging the life of existing sites. Also, it has been hoped that the quantity of the ashes being dumped can be reduced by employing the ashes for useful purposes. But, when the ashes are used, for example, roadbed aggregates in pavement blocks, it is necessary to prevent the dissolution in the water of the harmful heavy metals such as Pb, $Cd^{2+}$, $Cr^{6+}$, Hg and others. Solidification of the ashes with cement does not achieve this.

For instance, according to the results of the experiments conducted by the inventors of the present invention, when the incineration ashes of the refuse incinerator and the ashes collected by the dust collectors are solidified with use of Portland cement, the amount of Pb and Cd dissolved in the ordinary rain and the acid water of pH 4 which corresponds to the acid rain is great as shown in Table 1 below and is confirmed to be well over the limit stipulated in Japan.

Table 1

| dissolution test method | PH | materials mixed in other than water | | unit | dissolution value Pb | dissolution value Cd |
|---|---|---|---|---|---|---|
| current dissolution test with neutral water | neutral | incineration ashes: collected by the dust collector : 100 g, cement: 20 g | | mg/l | 0.02 | <0.01 |
| | | ashes as collected 100 g, cement: 20 g | | mg/l | 0.03 | <0.01 |
| dissolution test with simulated acid rain | approximately 4 | incineration ashes: collected by the dust collector : 100 g, cement: 50 g | | mg/l | 6.4 | 1.1 |
| | | ashes as collected 100 g, cement: 50 g | | mg/l | 32 | 5.9 |
| dissolution value prescribed in the case of landfill | | | | | 3.0 | 0.3 |
| amount as contained (reference value) | | incineration ashes: collected by the dust collector : 100 g, cement: 50 g | | mg/l | 2095 | 48 |
| | | ashes as collected 100 g, cement: 50 g | | mg/l | 4583 | 183 |

The capacity of hydraulic i.e. cement-type solidifying material for fixing or shutting up heavy metals is enhanced by mixing in zeolite, fossil coral, volcanic ash sandy soil, peat moss chelate or the like with Portland cement. By this expedient it is possible to lower the quantity of Pb and Cd dissolved in neutral water to the level below the stipulated limit. But, it is impossible to lower the quantity of Pb and Cd dissolved in acid rain to the level below the stipulated limit.

Thus the present invention seeks to solve the problems encountered when the ashes are solidified by using Portland cement or the like as solidifying materials so that the ashes can be harmlessly dumped or used, for instance, as the pavement blocks or road aggregates. It is an objective of the present invention to provide an ash treatment method for making the incineration ashes harmless which can prevent at low cost

3

the dissolution of the heavy metals in acid water.

The inventors have conducted experiments for solidifying the incineration ashes with cement and have studied the mechanism of the solidification and, as a result, have discovered that as entrigite crystals produced by hydration reaction of cement develop and the size and volume of the pores in the crystal particle increase, the heavy metals in the ashes are fixed, i.e. shut up and confined in the pores. The inventors have noticed that promoting of the confinement of the heavy metals in the pores (i.e. moving of the heavy metals into the pores) by promoting the increase in the size and volume of the pores can help to fix more securely the heavy metals in the solidified objects, thereby preventing the leaching out of the heavy metals. Further, the inventors have conducted experiments to search for substances which can promote the confinement of the heavy metals in the above-mentioned pores and found that $Al_2 O_3$ and others can serve to promote the confinement of the heavy metals.

The present invention is provided on the basis of the findings above-mentioned.

According to the present invention there is provided a method of treating ashes from a refuse incinerator such method comprising mixing the ashes with solidifying material and water characterised by the addition to the mixture of a clay of the kind specified.

A clay of the kind specified, sometimes called a white clay, is a clay of the type used for refining and purifying oil by filtration. Examples of such clays are or contain fullers earth, bentonite, bauxite and alumina activated or otherwise. The clay will preferably be used, i.e. spent, after purifying use. The oil should be removed from this spent clay before or during the method of the present invention.

The invention further envisages mixing the ashes with the spent white clay which has been deprived of oil contained thereby by burning in a firing furnace and supplying the incineration gases from the firing furnace to the refuse incinerators to put the heat as generated to an effective use.

The invention further comprises, depriving the spent clay of oil by supplying the spent white clay directly to the refuse incinerator to burn oil contained in the spent white clay and solidifying with the solidifying materials the refuse incineration ashes which include the incineration residues of the spent white clay.

Also, the invention comprises burning oil contained in the spent white clay by supplying the spent white clay directly to the refuse incinerator and solidifying with the solidifying material the incineration residues including the spent white clay, as collected by the dust collector.

The invention also comprises blowing into the refuse incinerator in company with the incineration gases the incineration residues of the spent clay whose oil contained therein has been burned in the fluidized bed furnace and adding the solidifying material to the incineration residues as collected by the dust collector as attached to the refuse incinerator for solidifying the mixtures as gained.

A possible mechanism of the invention is as follows. When the ashes, the spent white clay which has been deprived of oil and the solidifying material such as cement are mixed at a certain ratio and then water is added to the mixtures, the ashes start to be solidified due to hydration reaction (hydraulicity reaction). At the time of the solidifying, the heavy metals contained in the ashes are locked up on the etringite crystals produced by hydration reaction. It is supposed that Pb, Cd and others are shut up and confined more firmly inside the etringite crystals because $Al_2O_3$ and the others contained in the spent white clay promote the confinement of the heavy metals.

The invention will now be described by way of example and with reference to the drawings wherein:-

Figure 1 is an explanatory drawing illustrating the basic functions of the invention;

Figure 2 is an explanatory drawing of the invention as structured to deprive the spent white clay of oil with use of the firing furnace;

Figure 3 is an explanatory drawing of the invention as structured to connect the refuse incinerator and the firing furnace for firing the spent white clay;

Figure 4 is an explanatory drawing of the invention as structured to supply the spent white clay to the inside of the refuse incinerator;

Figure 5 is an explanatory drawing of the invention as structured to supply the spent white clay to the inside of the incineration chamber of the refuse incinerator for firing the spent white clay in the air;

Figure 6 is an explanatory drawing of the invention as structured to supply the spent white clay to the inside of the fluidized bed-type refuse incinerator;

Figure 7 is an explanatory drawing of the invention as structured to connect the refuse incinerator and the fluidized bed-type firing furnace for firing the spent white clay.

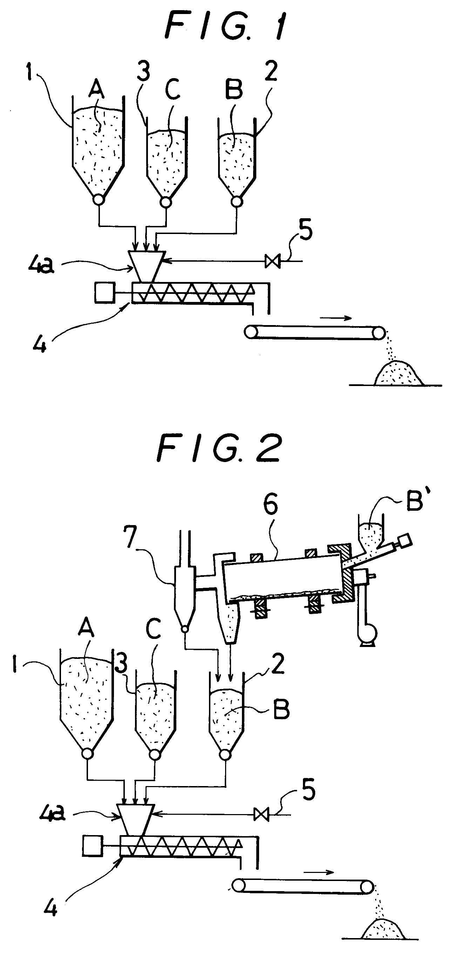

In Figure 1 the numeral 1 designates an ashes hopper, 2 a spent white clay hopper, 3 a solidifying material hopper, 4 a mixer with a feed hopper 4a and 5 a water supply tube.

In the ashes hopper 1 are stored the incineration ashes discharged from the refuse incinerator and the floating ashes collected by the dust collector attached to the incinerator (referred to as the ash collector collected ashes hereinafter).

Table 2 below shows an example of the chemical composition of the aforementioned incineration ashes and the dust collector collected ashes discharged from the refuse incineration facilities in Osaka, Japan

Table 2

| item | sample | incineration ashes | floating ashes |
|---|---|---|---|
| water | % | 1 8. 9 | 1. 7 |
| reduction by heating | %d r y | 4. 1 | 5. 2 |
| $S i O_2$ | 〃 | 3 3. 0 | 9. 5 |
| A l | 〃 | 5. 7 | 3. 3 |
| F e | 〃 | 9. 4 | 0. 9 |
| Mn | 〃 | 0. 1 9 | 0. 1 |
| C u | 〃 | 0. 0 7 | 0. 0 3 |
| N i | 〃 | 0. 0 2 | < 0. 0 1 |
| Z n | 〃 | 1. 0 | 2. 0 |
| C a | 〃 | 1 1. 9 | 3 1. 3 |
| N a | 〃 | 1. 1 | 3. 1 |
| K | 〃 | 0. 3 5 | 3. 1 |
| C l | 〃 | 1. 1 | 2 0. 8 |
| $S O_4$ | 〃 | 1. 6 | 4. 1 |
| $P O_4$ | 〃 | 0. 4 6 | 0. 5 1 |
| $C r^{6+}$ | m g／k g | < 1 | < 1 |
| C d | 〃 | 5 4 | 2 6 0 |
| P b | 〃 | 4 1 3 0 | 6 6 5 0 |
| A s | 〃 | 1 1 | 1 4 |
| T−H g | 〃 | 1 0. 4 | 1 8. 6 |
| CN | 〃 | − | − |
| o r g−P | 〃 | − | − |
| PH | | − | − |

In the above mentioned spent white clay hopper 2 is stored the spent white clay (such as the spent activated white clay and the spent acid white clay) which, after used for refining of cooking oil and the like, has been deprived of oil contained therein.

Table 3 below shows an example of the chemical composition of the aforementioned spent activated white clay and Table 4 below shows an example of the chemical composition of the above-mentioned spent acid white clay.

Table 3

| component | ratio of amount as contained % |
|---|---|
| Ig-Loss | 5. 3 |
| $SiO_2$ | 79. 2 |
| $Al_2O_3$ | 9. 8 |
| $Fe_2O_3$ | 2. 4 |
| MgO | 2. 2 |
| CaO | 0. 8 |
| Total | 99. 7 |

Table 4

| component | ratio of amount as contained % |
|---|---|
| Ig-Loss | 7. 1 |
| $SiO_2$ | 68. 5 |
| $Al_2O_3$ | 17. 0 |
| $Fe_2O_3$ | 4. 3 |
| MgO | 2. 4 |
| CaO | 0. 6 |
| Total | 99. 9 |

The spent activated white clay and the spent acid white clay which have been used for oil refining contain oil of 30 to 40%. Before the spent white clay is supplied to the hopper 2, the oil has been removed either by solvents or by firing.

In the above mentioned solidifying materials hopper 3 is stored Portland cement to be used as the solidifying material. The ordinary Portland cement which has the chemical composition as indicated in Table 5 below is used in the present embodiment.

Table 5

| component | ratio of amount as contained % |
|---|---|
| CaO | 60~66 |
| $SiO_2$ | 18~24 |
| $Al_2O_3$ | 5~8 |
| $Fe_2O_3$ | 2~4 |
| MgO | 1~2 |
| $SO_3$ | 1~2 |

A solidifying hydraulic material whose principal component is the blast furnace granulated slag may be used as well as Portland cement.

The ashes A, the spent clay B and the solidifying material C as stored in the respective hoppers are supplied to the hopper 4a of the mixer 4 at the ratio of 1 : 0.25 - 0.5 : 0.5 - 0.25 (in weight). Water is added to the mixtures. The mixtures further undergo the mixing operation and then are discharged from the mixer

6

4. As a result, the hydraulicity reaction occurs with the result that the mixtures are gradually solidified and hardened. The mixtures are left and laid aside for about a week for further hardening. The hardness of the solidified mixtures reaches the compressive strength of 3 - 8 kg/cm$^2$ and are ready for dumping at the land fill ground.

Table 6 below shows the results of the dissolution test using an imitation of the acid rain (the acid water of PH 4) in which the ashes A, the spent white clay B and the solidifying material C are mixed in the ratio of 1 : 0.5 : 0.5 and solidified.

Table 6

| dissolution test method | dissolution test with simulated acid rain | | | |
|---|---|---|---|---|
| P H | approximately   4 | | | |
| materials mixed in other than water | incineration ashes: 100 g, cement: 100 g, spent acid white clay : 50 g | ashes as collected by the dust collector : 100 g, cement: 50 g, spent acid white clay : 50 g | incineration ashes: 100 g, cement: 50 g, spent activated white clay: 50 g | ashes as collected by the dust collector : 100 g, cement: 50 g, spent activated white clay: 50 g |
| dissolution value | unit | mg/l | | | |
| | Pb | 0.8 | 0.93 | 0.95 | 1.8 |
| | Cd | 0.06 | 0.1 | < 0.1 | 0.16 |

The dissolution test as shown in Table 6 indicates the results of the test as conducted in accordance with the test method provided in the Notice No. 3 issued by the Environment Office of Japan. That is to say, the solidified object is crushed and is sieved to produce a test sample of granules measuring 0.5mm - 5mm in diameter. Next, the sample (g) and the solvent (ml) (which is gained by adding hydrochloric acid to pure water with the resultant acidity of PH 4) are mixed in the ratio of 1 : 10 to provide a sample liquid of 500 ml - 600 ml. Further, the sample liquid is shaken (200 times per minute and in the shaking range of 4 - 5 cm) by a shaker at the standard temperature (at about 20°C) and the standard atmospheric pressure (about 1 atm) for 6 hours without stop. During the shaking time, HCL aqueous solution of the concentration of 6N is continuously supplied to maintain the sample liquid at PH 4. The dissolution operation is conducted under the above-mentioned conditions. When the predetermined time long dissolution operation finishes, the sample liquid is filtered through glass fibre filter paper (GFP) having the filtering opening measuring 1 micron in diameter. The dissolution quantity of Pb and Cd in the solution, after filtered, are measured.

As apparent from the comparison between Table 1 and Table 6, the quantity of Pb and Cd as dissolved from the solidified object according to the present invention is far below the quantity prescribed in Japan. It is clear that the present invention is capable of confining the heavy metals harmlessly in the solidified object.

It is easily understood that the higher is the mixing ratio (in weight) of the spent white clay B and the solidifying material C to the Ashes A, the less is the quantity of the heavy metals as dissolved. But, the high weight mixing ratio of the spent clay B and the solidifying materials C contributes to the high costs of the materials as employed in the treatment and the increase in the volume of the solidified object. From the economical point of view, the ceiling limit of their weight mixing ratio in relation to the ashes A is about 50%.

On the other hand, if the quantity of the spent clay B and the solidifying materials C as mixed in is too small, the quantity of Pb and Cd as dissolved increases. Table 7 below shows the changes in the quantity of Pb and Cd as dissolved which are observed when the weight mixing ratio of the spent white clay B and the solidifying material C is varied. It is noted that the ashes which are collected by the electric dust collector attached to the refuse incinerator are used as the ashes A. In Table 7, the quantity (g) of the spent clay B and the solidifying material C as mixed in is against the ashes of 100 g.

Table 7

| | amount as dissolved in acid water of PH 4 | | ratio in relation to 100 g of ashes as collected by dust collector | |
|---|---|---|---|---|
| sample No | Pb (mg/ℓ) | Cd (mg/ℓ) | cement (g) | fired spent white clay (g) |
| 1 | 1. 2 | 0. 11 | 50 | 50 |
| 2 | 4. 8 | 0. 47 | 20 | 20 |
| 3 | 3. 2 | 0. 28 | 50 | 20 |
| 4 | 1. 5 | 0. 17 | 50 | 50 |
| 5 | 2. 3 | 0. 19 | 20 | 50 |

As apparent from Table 7, when the weight mixing ratio of the spent white clay B is below 0.2, the quantity of Pb as dissolved is (3.2 mg/l) even if the mixing ratio of the solidifying materials C is 0.5 (see Sample No.3). Accordingly the mixing ratio of the spent clay B to the ashes A need be at least above 0.25 for the safety reason.

Further, the quantity of the solidifying material C to be mixed in is greatly affected by the weight mixing ratio of the spent white clay B. When the weight mixing ratio of the spent clay B is small, the quantity of Cd as dissolved exceeds the prescribed value (see Sample No.2) if the mixing ratio of the solidifying material C is lowered. Consequently, the weight mixing ratio of the solidifying material C against the ashes A need be the value of 0.25 or above for the safety reason.

The weight mixing ratio of the solidifying material C is allowed to be lowered as the weight mixing ratio of the spent white clay B rises. According to the results of the dissolution test, the mixtures of the ashes A of 100 g, the spent white clay B of 25 g and the solidifying material C of 50 g can produce the same quantity of Pb and Cd as the mixtures of the ashes A of 100 g, the spent clay B of 50 g and the solidifying material C of 25 g.

Figure 2 illustrates a second embodiment of the invention. According to the second embodiment of the invention, a firing furnace 6, such as a rotary kiln, is provided near the refuse incinerator (not shown). Oil contained in the spent clay B' is eliminated by firing the spent clay B' in the firing furnace 6. The spent clay B' which has been deprived of oil is carried to the hopper 2 and stored therein. 17 designates a cyclone.

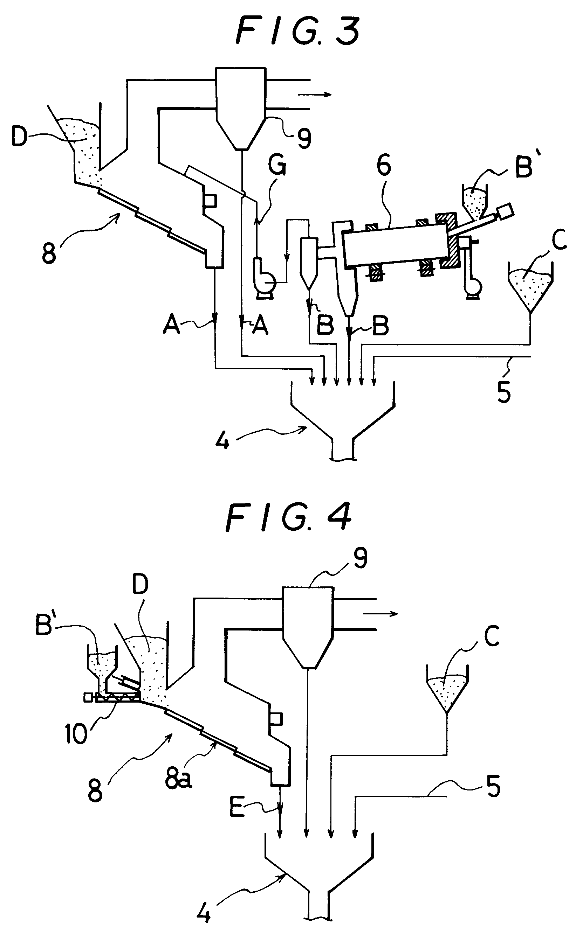

Figure 3 illustrates another embodiment in which the refuse incinerator 8 and the spent white clay firing furnace 6 are positioned side-by-side. The incineration gases generated when oil contained in the spent white clay B' is burned in the firing furnace 6 are provided to the inside of the refuse incinerator 8 and utilized to dry the refuse, thus not wasting the heat. The spent white clay B from the firing furnace 6 and the solidifying material C are added, in a predetermined ratio, to the ashes from the refuse incinerator 8 and the electric dust collector 9 and are mixed with the ashes, as in the case of Figure 1.

Figure 4 shows another embodiment of the invention. The spent white clay B' which has been used to refine oil is pushed into the incineration stoker 8a of the refuse incinerator 7 by the spent white clay supply apparatus 10 and undergoes incineration together with the city refuse D on the incineration stoker 8a. The incineration residues E (i.e. the mixtures of the ashes A and the spent white clay B) are taken out of the refuse incinerator 8. The solidifying material C is mixed in the incineration residues E in the ratio of 0.25 - 0.5 : 1 in weight to the ashes A, is given water and undergoes the mixing operation.

The quantity of the spent white clay B; as supplied is controlled in such a manner that the weight mixing ratio of the ashes A to the spent white clay B in the incineration residues E (the mixtures of the ashes A and the spent white clay B) turns out to be 1:0.25-0.5 As a result, the ashes A will come to be contained in the incineration residues E in the ratio of 1:0.25-0.5 against the spent white clay B.

The spent white clay B' is light and granular and, therefore, can be easily pushed inside the refuse incinerator 8.

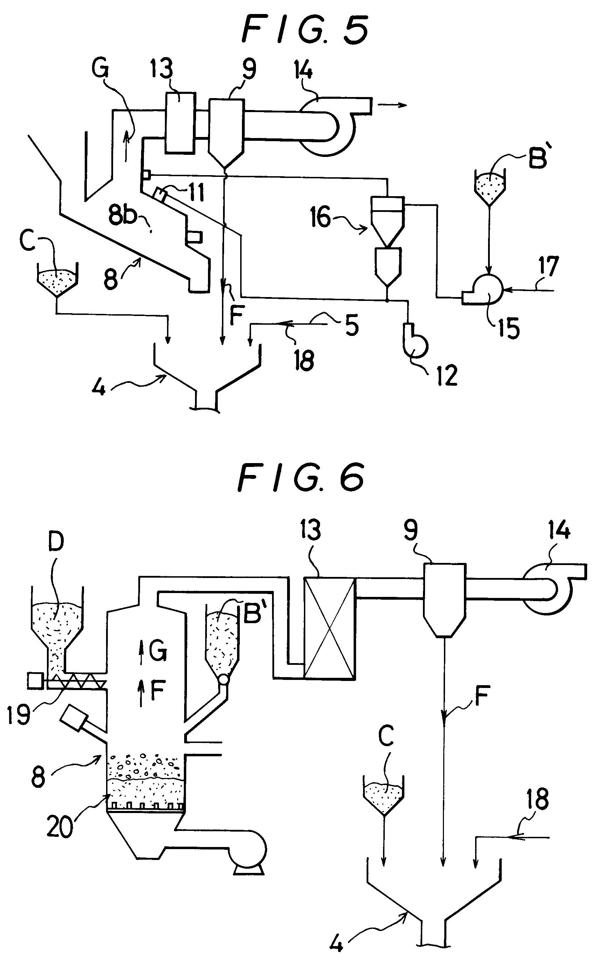

Figure 5 shows another embodiment of the invention. The spent white clay containing oil therein is blown into the incineration chamber 8b of the refuse incinerator 8 by the spent clay incineration apparatus 11 such as a burner and has oil contained therein burned in the air in the same manner as in the pulverized coal incineration. The spent white clay B which has been deprived of oil contained therein by the burning is lighter in weight. As a result, almost all the spent white clay B floats in the air in the incineration chamber 8b and is carried together with the incineration gases G to the dust collector 9 and is collected by the dust collector 9 together with the floating ashes from the refuse incinerator.

The quantity of the aforementioned spent white clay B' as blown in is controlled in such a manner that the weight mixing ratio of the spent white clay B contained in the incineration residues F (the mixtures of the spent white clay B and the floating ashes A) as collected in the dust collector 9 to the ashes A will be 0.25 - 0.5 : 1. As a result, the solidifying material C of cement is mixed into the incineration residues F from the dust collector 9 in such a manner that the weight mixing ratio of the solidifying material C to the ashes is 0.25 - 0.5 : 1, is given water, undergoes the mixing operation together with the incineration residues F, and is solidified.

In Figure 5, the numeral 12 designates a fan, 13 a gas cooler, 14 a fan, 15 a disperser, 16 a collector cyclone, 17 hot air, and 18 water.

Figure 6 shows an embodiment in which a fluidized bed type incinerator, instead of the stoker type incinerator 8 as shown in Figure 5, is used. That is to say, the spent white clay B' which has been used for refining of oil is supplied to the fluidized bed type incinerator 8 in which oil contained in the spent clay B' is burned in the so-called fluidized bed method while the refuse D is supplied to the inside of the incinerator through the refuse supplying apparatus 19.

The city refuse D and the spent white clay B' are incinerated in the so-called flow method on the fluidized bed 20 which is formed by the flow medium, such as a silica sand, bigger in the particle size and in the specific gravity than the spent white clay B. The incineration residues F as produced are carried out of the incinerator together with the incineration gases G and collected by the electric dust collector 9.

The quantity of the spent white clay B' as supplied which contains oil therein is controlled in such a manner that the weight mixing ratio of the spent white clay B' as contained in the incineration residues F as collected by the electric dust collector 9 to the refuse incineration ashes A is 0.25 - 0.5 to 1. Also, to the incineration residues F collected by the electric dust collector 9 is added the solidifying material C of cement in such a manner that the weight ratio of the solidifying material C of cement to the ashes A is 0.25 - 0.5 to 1. The incineration residues A and the solidifying material C of cement are mixed together, given water and solidified.

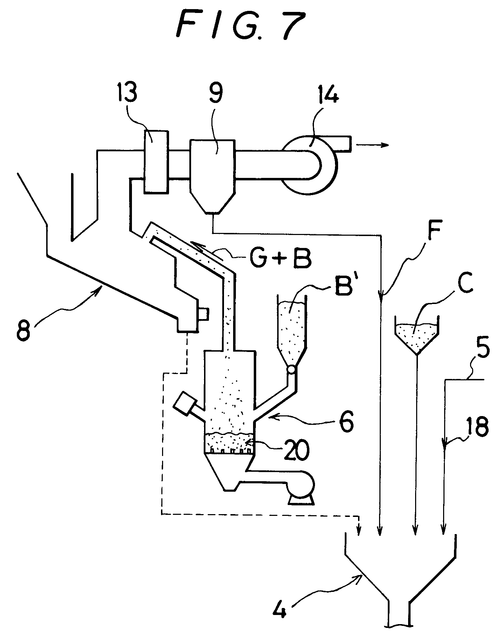

Figure 7 shows another embodiment of the invention which is characterised in that the refuse incinerator 8 and the spent white clay firing furnace 6 of the fluidized bed type are combined. The fluidized bed 20 of the firing furnace 6 formed by the fluidized bed medium, such us silica sand, which is bigger in the particle size and in the specific gravity than the spent white clay B' which has been used for refining of oil. The spent clay B as supplied in the firing furnace 6 is fierd on the fluidized bed 20 in the so-called fluidized method.

The spent white clay B which has been deprived of oil by burning is introduced almost in its entirety into the refuse incinerator 8 together with the incineration gases G and proceeds to the electric dust collector 9, with the incineration gases G and the floating ashes A inside the incinerator 8, for collection thereby.

The quantity of the spent white clay B', containing oil therein, which is supplied to the firing furnace of the fluidized bed type is controlled in such a manner that the weight mixing ratio of the ashes A to the spent white clay B both in the incineration residues F as collected by the dust collector 9 will be 1 : 0.25 - 0.5. Also, to the incineration residues F as collected by the dust collector 9 is added the solidifying material C of cement in such a manner that the weight mixing ratio of the solidifying material C of cement to the ashes A will be 0.25 - 0.5 to 1. The incineration residues F and the solidifying material C of cement are mixed together, given water, and solidified.

In all embodiments the quantity of Pb and Cd as dissolved in the acid water (PH 4) from the solidified object is below the value prescribed in Japan. Further, the mixtures can be solidified under pressure and/or heat. The mixtures are solidified in the desired configurations in accordance with use (for instance, bricks, dumping materials and others).

Stated again in general terms the present invention comprises the steps of removing oil from the spent clay which has been used for refining of oil, mixing the spent clay deprived of oil, the solidifying material and the refuse incineration ashes preferably in the predetermined ratio, and adding water to and solidifying the mixtures. As a result, $Al_2O_3$ and the others in the spent white clay effectively act to firmly shut up and confine Pb, Cd and the like inside the solidified object with the result that the amount of their dissolution in the acid water such as the acid rain is lowered below the prescribed value. Accordingly, even if the solidified object is used for the useful purposes or dumped at the land fill ground, there arise no pollution problems.

Further, since the spent clay which usually requires the separate treatment can be put to the re-use, the costs needed for the treatment of the spent white clay can be saved. Further, the amount of the solidifying material of cement as required can be cut. The present invention makes it possible to substantially cut the costs for the treatment of the refuse incineration ashes and, needless to say, is capable of making the solidifed object useful.

Further, if the spent clay is supplied to the refuse incinerator for removing oil contained in the spent clay by burning the same, the energy of the spent clay can be effectively used for the refuse incineration, thereby saving the energies as required. Further, the additional work of mixing the spent clay into the ashes is saved, thereby simplifying the treatment step.

**Claims**

1. A method of treating ashes from a refuse incinerator such method comprising mixing the ashes with solidifying material and water characterised by the addition to the mixture of a clay of the kind specified.

2. A method as claimed in Claim 1 wherein the clay is spent white clay and the solidifying material is Portland cement or similar hydraulically settable material.

3. A method as claimed in Claim 1 or 2 wherein the ratio by weight of the ashes, the clay and the solidifying material is 1 : 0.5 - 0.25 : 0.25-0.5.

4. A method according to any preceding claim comprising the steps of burning off the oil in the spent white clay in an incinerator and using the incinerating gases in the refuse incinerator.

5. A method as claimed in any of Claims 1 to 3 comprising the steps of burning the oil in the spent clay in the refuse incinerator and thereafter mixing in the solidifying material and water.

6. A method as claimed in Claim 5 wherein incinerator residues collected by a dust collector attached to the incinerator are incorporated.

7. A method as claimed in Claim 6 wherein the refuse incinerator is of the fluidised bed type.

8. A method as claimed in either Claim 6 or Claim 7 wherein the ratio of spent clay in the incinerator residues to the ashes is 0.25 - 0.5 to 1.

# F I G. 1

# F I G. 2

# F I G. 3

# F I G. 4

FIG. 5

FIG. 6

# FIG. 7